# DEMANDE DE BREVET EUROPEEN

(11) **EP 3 662 754 A1**
(43) Date de publication de la demande: **10.06.2020**
(21) Numéro de dépôt: 19213345.2
(22) Date de dépôt: 03.12.2019
(51) Int. Cl.: A23B 4/16, A23L 3/3418, A22C 17/00

(54) **PROCÉDÉ DE PRÉSERVATION DE PRODUITS ALIMENTAIRES PAR SATURATION AVEC UN GAZ SOUS PRESSION**

(30) Priorité: 07.12.2018 FR 1872530
(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: AVILES, Carlos, 78350 LES LOGES EN JOSAS (FR); COUSIN, Franck, 59120 Loos (FR); IBARRA, Dominique, 78350 LES LOGES EN JOSAS (FR)
(74) Mandataire: Mellul-Bendelac, Sylvie Lisette

(57) **Abrégé**

L'invention propose un procédé de conditionnement d'un produit, notamment d'un produit alimentaire, dans un emballage,
du type où :
a) on positionne le produit (3) dans un emballage ;
b) on effectue une étape de conditionnement du produit dans un emballage par le fait que l'on introduit dans l'emballage une atmosphère de protection (MAP) ou bien on effectue un tirage sous vide de l'emballage, ou bien on met en place une fermeture de l'emballage à l'aide d'un film de type « seconde peau »;
se caractérisant en ce que préalablement à l'étape a), ou bien entre l'étape a) et l'étape b), on soumet le produit à un gaz ou mélange gazeux (4) sous une pression supérieure à la pression atmosphérique, gaz ou mélange gazeux comportant du CO₂, préférentiellement au moins 50% de CO₂, en vue de saturer le produit en gaz.

## Description

La présente invention concerne le domaine du conditionnement de produits alimentaires, sous atmosphère modifiée (cette industrie parle de « MAP ») ou sous vide ou encore dans des conditions que l'on nomme dans ce domaine « seconde peau ».

Les atmosphères utilisées dans de tels emballages MAP (de fruits, de légumes, de salades, de viandes et de charcuteries etc...) sont le plus souvent constituées de gaz tels que l'azote, le dioxyde de carbone, l'oxygène ou encore l'argon ou leurs mélanges. Ces atmosphères, de façon bien connue, ralentissent les phénomènes de dégradation microbiens ou biochimiques du produit.

L'invention s'intéresse tout particulièrement aux produits de viande, vendus ou manipulés aux rayons boucherie/charcuterie de la petite et grande distribution.

Il est bien connu en effet que de nombreux produits se dégradent au contact de l'air (produits alimentaires, cosmétiques, ...). Aussi, afin de préserver leurs qualités et propriétés et/ou d'augmenter leur durée de vie et de consommation, ils peuvent être conservés dans une atmosphère protectrice dont la composition est ajustée en fonction de la nature des produits à conserver.

Force est de constater que le conditionnement de la viande a évolué ces dernières années, et ainsi les rayons libre-service (où le client se sert directement en prenant un paquet contenant la pièce de viande qu'il désire, emballée sous emballage de protection) ont connu un rapide développement dans les supermarchés, au détriment des rayons boucherie traditionnels.
La viande est conditionnée directement chez le producteur et ainsi distribuée dans les magasins, ou bien encore conditionnée sur place par le département boucherie du magasin considéré. Ce changement nécessite une maîtrise des techniques de conditionnement par les industriels et un allongement de la DLC (= Date Limite de Consommation).

La pratique du conditionnement sous film avec de l'air a fortement diminué et le conditionnement sous atmosphère modifiée, ou sous vide ou encore selon la technique que cette industrie nomme « sous skin » ou « seconde peau » ont été privilégiés.

On rappelera que la technique dite « sous skin » peut se décrire comme la mise en place d'une seconde peau qui épouse la surface du produit : le produit est positionné sur une barquette ou une pièce en carton, un film plastique est chauffé afin de l'assouplir puis déposé sur le produit, , épousant ainsi sa forme sans le serrer, le déformer ni modifier son contenu.

L'augmentation de la DLC de la viande conditionnée est donc un enjeu majeur de nos jours, que les acteurs de ce secteur veulent voir augmentée.

Et une des pistes intéressantes pour augmenter cette DLC réside dans les traitements sous pression de gaz.

La présente invention propose alors une solution de traitement du produit sous pression d'un gaz, permettant de saturer le produit traité avec ledit gaz, et s'adaptant sans difficultés au type de dispositif actuellement opérationnel chez les industriels pour mettre en place des emballages de type seconde peau (« skin ») ou bien encore pour mettre en place un MAP classique sous atmosphère, tout en atteignant des durées de conservation plus performantes que celles atteintes sous l'un des quatre modes habituels (air, MAP, vide, seconde peau).

On propose alors selon la présente invention une méthode permettant la saturation d'un produit alimentaire, et notamment des produits de la viande (boeuf, porc, poulet, poisson ou autre) par un gaz pur (i.e un gaz « seul », de préférence du dioxyde de carbone) ou un mélange gazeux (préférentiellement majoritairement du dioxyde de carbone combiné avec un ou plusieurs gaz tels que l'azote, l'oxygène, le protoxyde d'azote, l'argon, l'hélium ou encore l'hydrogène, majoritairement c'est-à-dire comportant au moins 50% de CO₂) afin de prolonger sa durée de vie par l'inhibition des réactions de dégradation. Pour cela le produit est placé sous pression du gaz qui contient du dioxyde de carbone.

L'invention peut par exemple être mise en œuvre dans un autoclave dans lequel le produit est placé, préférentiellement distribué sur des grilles afin d'exposer toutes ses surfaces au contact du gaz, puis le produit est soumis à une pression supérieure à la pression atmosphérique qui est atteinte par l'injection du gaz ou mélange gazeux dans l'autoclave.

Une fois le produit saturé en gaz, une étape de cryo-croûtage en surface (par apport de frigories) est avantageusement pratiquée afin de « bloquer » le gaz dans la matrice alimentaire pendant l'étape de conditionnement ultérieure, que l'étape ultérieure soit une étape de mise sous vide ou sous seconde-peau (skin) ou selon un MAP traditionnel avec mise en place d'une atmosphère contrôlée dans l'emballage, cette étape de cryo-croutage peut être réalisée dans un dispositif en aval de l'autoclave, par exemple un tunnel ou bien une cellule cryogénique.

A titre illustratif, une fois le produit alimentaire placé dans l'autoclave, avantageusement sur des grilles, l'injection de gaz peut commencer. L'évacuation de gaz est maintenue afin de permettre la sortie de l'air contenu dans l'autoclave. Après un temps donné de balayage, l'évacuation de gaz est fermée et l'injection est maintenue afin de faire augmenter la pression jusqu'à une valeur de consigne.

On contrôle alors avantageusement les paramètres suivant du procédé :
- La pression de consigne est déterminée en fonction de l'épaisseur du produit et du degré de pénétration du CO₂ souhaité. On peut envisager une pression dans la gamme allant de 2 à 60 bar, mais plus préférentiellement dans la gamme allant de 5 à 20 bar.
- Selon un des modes de mise en œuvre de l'invention, la température est contrôlée tout le long de l'opération et maintenue constante, par exemple au voisinage de 0 °C pour favoriser la solubilisation du CO₂ dans la matrice alimentaire.
- Le temps de contact est déterminé en fonction de l'épaisseur du produit à saturer, on peut évoquer typiquement un temps de contact entre 10 secondes et 48 h.

Une fois le temps de séjour écoulé, le gaz est lentement évacué de l'autoclave afin d'éviter la congélation de la viande et la formation de bulles à l'intérieur de la matrice alimentaire.

Selon une des mises en œuvre de l'invention, l'autoclave est dotée d'une double enveloppe permettant le contrôle de la température : en effet, on peut alors faire circuler un fluide dans la double enveloppe (cela peut être tout simplement de l'eau par exemple, mais également un fluide frigorigène), et ainsi, les transferts thermiques se font par la paroi séparant l'intérieur de la cuve de l'intérieur de la double enveloppe. La régulation thermique est ainsi assurée pour éviter les augmentations de température du produit consécutives à l'augmentation de la pression dans l'enceinte.

Selon une autre des mises en œuvre de l'invention, l'étape de mise sous pression et l'étape de conditionnement sont réalisées à une température comprise entre 4°C et 20°C, et une fois le produit conditionné la température est abaissée en dessous de 4°C.

Comme on l'aura compris à la lecture de ce qui précède, différents modes de réalisation en lien avec la température sont proposés ici :
1. Lorsque l'on souhaite solubiliser un maximum de CO₂ dans la matrice, il est avantageux comme dit précédemment de maintenir la température tout au long de l'opération entre 0 et 4 °C.
2. Mais dans certains cas, on souhaite dissoudre moins de CO₂, notamment pour éviter la désorption ultérieure du CO₂ lors du stockage du produit (risque de formation de bulles entre la matrice et le film du fait de l'augmentation de température). Ainsi, la matrice ne sera pas sursaturée en CO₂, mais elle aura la quantité nécessaire de CO₂ pour sa conservation.

Selon une autre des mises en œuvre de l'invention, un temps d'ajustement du taux de CO₂ dissous est respecté entre la fin de la décompression et l'étape de conditionnement. C'est-à-dire que le temps d'ajustement permet de désorber une partie du CO₂, ce qui est un autre moyen d'éviter la formation de bulles entre la matrice et le film pendant le stockage.

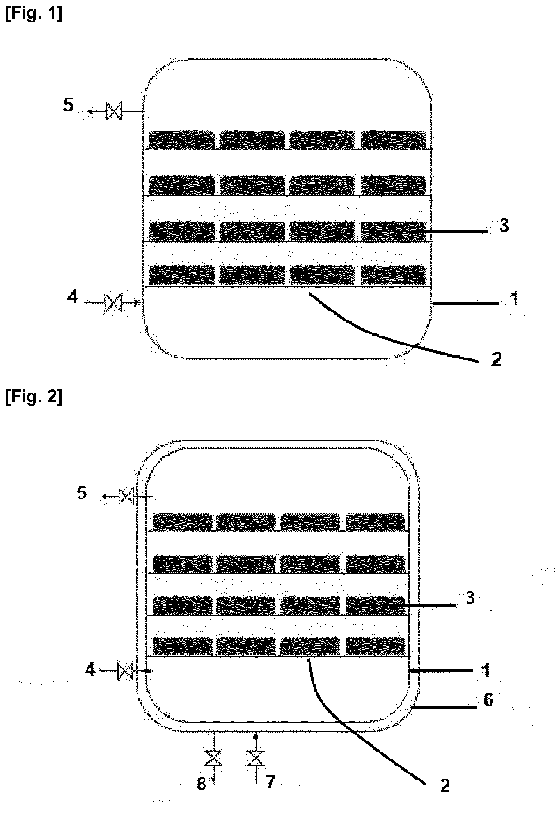

La figure 1 annexée fournit une vue schématique partielle d'un autoclave permettant la mise en œuvre de l'invention où l'on peut noter la présence des éléments suivants :
- en référence 1 : un autoclave
- en référence 2 : une grille sur laquelle peuvent être déposés les produits 3 à traiter
- en référence 4 : l'arrivée de gaz dans le dispositif, par exemple du CO₂ seul ou en mélange
- en référence 5 : l'évacuation de gaz hors de l'autoclave

La figure 2 annexée fournit une vue schématique partielle d'un autoclave permettant la mise en œuvre de l'invention selon un autre de ses modes de mise en œuvre, où ici l'autoclave 1 présente une double enveloppe 6, dans laquelle il est possible d'injecter un fluide de refroidissement (eau, cryogène...) grâce à l'arrivée 7 de fluide et à l'évacuation 8.

## Revendications

1. Procédé de conditionnement d'un produit, notamment d'un produit alimentaire, dans un emballage, du type où :
a) on positionne le produit (3) dans un emballage ;
b) on effectue une étape de conditionnement du produit dans un emballage par le fait que l'on introduit dans l'emballage une atmosphère de protection (MAP) ou bien on effectue un tirage sous vide de l'emballage, ou bien on met en place une fermeture de l'emballage à l'aide d'un film de type « seconde peau »;
selon lequel préalablement à l'étape a), ou bien entre l'étape a) et l'étape b), on soumet le produit à un gaz ou mélange gazeux (4) sous une pression supérieure à la pression atmosphérique, gaz ou mélange gazeux comportant du CO₂, préférentiellement au moins 50% de CO₂, en vue de saturer le produit en gaz,
**se caractérisant en ce que** une fois effectuée l'étape de mise sous pression de gaz, on soumet le produit à une étape de cryo-croûtage en surface par apport de frigories, afin de « bloquer » le gaz dans la matrice alimentaire du produit pendant ladite étape de conditionnement ultérieure.

2. Procédé selon la revendication 1, **se caractérisant en ce que** la pression pratiquée est située dans la gamme entre 2 et 60 bars, et plus préférentiellement entre 5 et 20 bar.

3. Procédé selon l'une des revendications précédentes, **se caractérisant en ce que** le produit est soumis au gaz ou mélange gazeux sous pression durant un temps de contact situé dans la gamme allant de 10 secondes à 48 h.

4. Procédé selon l'une des revendications précédentes, **se caractérisant en ce que** pour subir l'étape de mise sous pression de gaz, le produit est positionné dans un autoclave (1), préférentiellement sur une grille (2) afin d'exposer toutes ses surfaces au contact du gaz.

5. Procédé selon la revendication 4, **se caractérisant en ce que** l'autoclave est dotée d'une double enveloppe (6) où circule un fluide refroidissant.
